## Europäisches Patentamt

## European Patent Office

## Office européen des brevets

(19)

(11) Veröffentlichungsnummer : **0 338 332 B1**

## EUROPÄISCHE PATENTSCHRIFT

(12)

(45) Veröffentlichungstag der Patentschrift :
29.01.92 Patentblatt 92/05

(51) Int. Cl.$^5$ : **F16K 11/06**

(21) Anmeldenummer : **89106049.3**

(22) Anmeldetag : **06.04.89**

(54) **Sanitäres Mischventil.**

(30) Priorität : **08.04.88 DE 3811708**

(43) Veröffentlichungstag der Anmeldung :
**25.10.89 Patentblatt 89/43**

(45) Bekanntmachung des Hinweises auf die
Patenterteilung :
**29.01.92 Patentblatt 92/05**

(84) Benannte Vertragsstaaten :
**AT BE CH DE ES FR GB GR IT LI NL SE**

(56) Entgegenhaltungen :
**DE-A- 3 000 989**
**DE-A- 3 043 089**
**DE-A- 3 238 374**

(56) Entgegenhaltungen :
**DE-A- 3 244 121**
**DE-A- 3 503 793**
**FR-A- 2 543 253**
**FR-A- 2 592 127**
**US-A- 4 513 781**

(73) Patentinhaber : **IDEAL-STANDARD GMBH**
**Euskirchener Strasse 80**
**W-5300 Bonn 1 (DE)**

(72) Erfinder : **Bergmann, Konrad, Dr.**
**Zur Philippsburg 70**
**W-5560 Wittlich (DE)**

(74) Vertreter : **Müller, Karl-Ernst, Dr. et al**
**Patentanwälte Becker & Müller**
**Eisenhüttenstrasse 2**
**W-4030 Ratingen 1 (DE)**

## Beschreibung

Die Erfindung betrifft eine sanitäre Einhebelmischarmatur mit aus wenigstens zwei Scheiben gebildeten Steuerelementen, von denen eine als feststehende Ventilsitzscheibe ausgebildet ist und zwei Einlaßöffnungen für kaltes und warmes Wasser sowie eine Auslaßöffnung aufweist, während die zweite Scheibe auf der Ventilsitzscheibe beweglich angeordnet und mit einer Mischkammeröffnung versehen ist, wobei die Einlaßöffnungen in der Ventilsitzscheibe über einen Teilbereich einen verringerten Querschnitt aufweisen und die Querschnittsverringerungen jeweils symmetrisch zueinander in der Ventilsitzscheibe angeordnet sind.

Eine gattungsgemäße Mischarmatur ist in der DE-A-3503793 beschrieben, bei welchem die in der Ventilsitzscheibe angeordneten Einlaßöffnungen für das kalte und warme Wasser Querschnittsverringerungen aufweisen. Diese Querschnittsverringerungen sollen den Einstellschwenkwinkel des Bedienungshebels für die Mischwasserregelung im Temperaturbereich von etwa 30°-45° Celsius, der sogenannten Komfortzone, vergrößern, indem der freie Querschnitt der Einlaßöffnungen in einem so vorgegebenen Bereich verringert wird, so daß in diesem Bereich größere Verdrehungen des Bedienungshebels nur eine relativ geringe Veränderung des Durchflusses an kaltem und warmem Wasser zur Folge haben und somit die Mischarmatur in diesem Komfortzonenbereich wesentlich feinfühliger steuerbar ist.

Bei der bekannten Mischarmatur sind die Querschnittsverringerungen der Einlaßöffnungen nun als aus dem Scheibenmaterial ausgeformte Einschnürungen der schlitzartigen Einlaßöffnungen ausgebildet, und hiermit ist der Nachteil verbunden, daß Ventilsitzscheiben mit herkömmlichen Einlaßöffnungen nur mit einem besonderen Aufwand oder überhaupt nicht gegen Ventilsitzscheiben gemäß der bekannten Mischarmatur ausgetauscht werden können, zum Beispiel dann nicht, wenn die scheibenförmigen Steuerelemente in einem verschweißten Kartuschengehäuse angeordnet sind. Hinzu kommt, daß bei der bekannten Mischarmatur die Komfortzonenverbesserung nicht über den gesamten Öffnungshub wirksam ist.

Der Erfindung liegt daher die Aufgabe zugrunde, eine gattungsgemäße Mischarmatur derart zu verbessern, daß die Verwirklichung einer Komfortzonensteuerung über Querschnittsverminderungen an den Einlaßöffnungen der Ventilsitzscheibe einfacher durchführbar ist.

Die Lösung dieser Aufgabe ergibt sich einschließlich vorteilhafter Ausgestaltungen und Weiterbildungen aus dem Inhalt der Patentansprüche, welche dieser Beschreibung vorangestellt sind.

Die Erfindung sieht dabei vor, daß in die Einlaßöffnungen der Ventilsitzscheibe die Querschnittsverringerungen ausbesonder Einsätze mit Durchtrittsöffnungen eingesetzt werden, um so den freien Querschnitt der Einlaßöffnungen entsprechend zu verringern. Diese Einsätze sorgen in dem vorgegebenen Komfortzonenbereich für eine entsprechende Querschnittsverminderung, so daß größere Verstellbewegungen des Bedienungshebels nur eine gegenüber dem freien Querschnitt der Einlaßöffnungen geringere Veränderung des Durchflusses und damit des Mischungsverhältnisses zur Folge haben. Hiermit ist der Vorteil verbunden, daß bei herkömmlichen Mischarmaturen eine Komfortzonenverbesserung verwirklicht werden kann. Hinzu kommt, daß die Einsätze so gestaltet werden können, daß die Komfortzonenverbesserung über den gesamten Öffnungshub wirksam ist.

Nach einem besonderen Ausführungsbeispiel der Erfindung sind die Einsätze bündig in die Ventilsitzscheibe eingelassen, und hierzu ist es lediglich zweckmäßig, eingezogene Rücksprünge an der Scheibe vorzusehen, auf denen die Einsätze mit entsprechend ausgebildeten schulterartigen Vorsprüngen auflagern. Die Einsätze sind dabei in Anströmrichtung des Wassers in die Scheibe einzusetzen.

Nach einem weiteren Ausführungsbeispiel der Erfindung können die den Querschnitt der zur Verfügung stehenden Wasserwege vermindernden Einsätze auch außerhalb der Ventilsitzscheibe, nämlich in Strömungsrichtung des Wassers davor unmittelbar an den Ventilsitzscheibenkorper angrenzend für die Kalt- bzw. Warmwasserzufuhr angeordnet sein. Diese Anordnung eignet sich besonders für Mischarmaturers, bei denen die Ventilsitzscheibe ohne Zwischenschaltung eines Kartuschengehäuses unmittelbar mit den Anschlußkanälen verbunden ist. Hierbei ist es dann besonders vorteilhaft, die Einsätze noch im Bereich der Anschlüsse anzuordnen, wobei die Einsätze beispielsweise von den im Bereich der Übergänge der Anschlußkanäle in die Ventilsitzscheibe vorzusehenden Dichtungen gehaltert werden können.

Mit dieser Ausführungsform ist der Vorteil verbunden, daß auch bestehende Armaturen leicht nachgerüstet werden können, weil eine Änderung der Ventilsitzscheibe nicht erforderlich ist. Dies gilt besonders für bereits eingesetzte Mischarmaturen, bei denen die Regelscheiben in einem Kartuschengehäuse verschweißt sind.

Im Hinblick auf die Einstellung der Mischwassermenge und das Geräuschverhalten der Armatur kann es zweckmäßig sein, die Durchtrittsöffnungen bzw. -kanäle in den Einsätzen senkrecht oder schräg sowie geradlinig oder gebogen oder parallel jeweils zur Ebene der Ventilsitzscheibe anzuordnen.

Weiterhin kann es vorteilhaft sein, die Einsätze aus einem Siebmaterial auszubilden, wobei sämtliche Ausführungsformen aus Kunststoff bestehen können.

In der Zeichnung sind Ausführungsbeispiele der Erfindung wiedergegeben, welche nachstehend beschrieben sind. Es zeigen :

Fig. 1      eine sanitäre Mischarmatur im Längsschnitt

Fig. 2      eine Aufsicht auf eine Ventilsitzscheibe ohne Einsätze

Fig. 3      in einer herausgezogenen, vergrößerten Darstellung die Einlaßöffnungen der Ventilsitzscheibe gemäß Figur 2 mit den erfindungsgemäßen Einsätzen

Fig. 4      eine Schnittansicht nach Linie IV-IV in Figur 3

Fig. 5      ein anderes Ausführungsbeispiel der Erfindung in der Darstellung gemäß Figur 1.

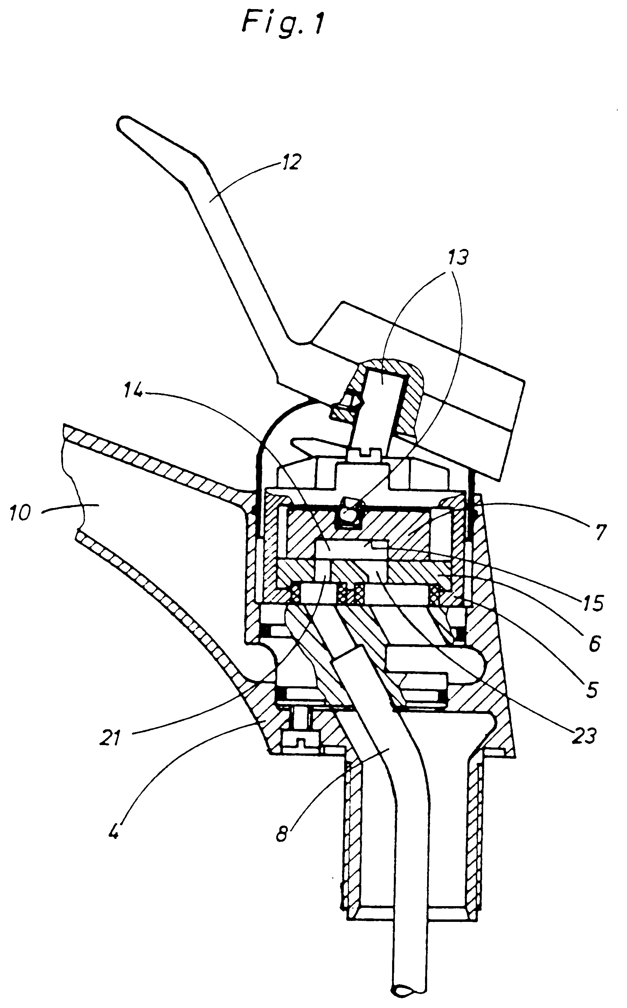

In Figur 1 ist mit 4 ein Ventilkörper bezeichnet, in dem eine Kartusche 5 mit aus zwei Scheiben 6 und 7 gebildeten Steuerelementen angeordnet ist. Die Scheibe 6 ist mit Hilfe von Ausnehmungen 20 im Ventilkörper festgelegt und dient als Ventilsitzscheibe. Sie weist eine Einlaßöffnung 21 für das warme Wasser und eine Einlaßöffnung 21 für kaltes Wasser auf sowie eine Auslaßöffnung 23, welche zu einem Auslauf 10 des Mischventils führt. Die Einlaßöffnungen 21, 22 sind länglich, schlitzartig gestaltet mit einer äußeren Begrenzungskante 17 und einer inneren Begrenzungskante 16. Die beweglich ausgebildete Scheibe 7 ist durch einen mit einem Bedienungshebel 12 in Verbindung stehenden und in eine Ausnehmung eingreifenden Steuerhebel 13 verschieb- und schwenkbar angeordnet und besitzt eine Öffnung in der Form einer nur zur Ventilsitzscheibe 6 hin offenen Mischkammer 14 für Misch- und Umlenkfunktionen, die mit den Einlaßöffnungen 21, 22 und der Auslaßöffnung 23 in unterschiedlichem Maße in Überdeckung bringbar ist. Dabei steht die Einlaßöffnung 21 für das warme Wasser über einen Anschlußkanal 8 mit einer nicht dargestellten Warmwasserquelle in Verbindung. Die bewegliche Scheibe 7 ist in dem Gehäuse der Kartusche 5 über im einzelnen nicht dargestellte Gestaltungen geführt.

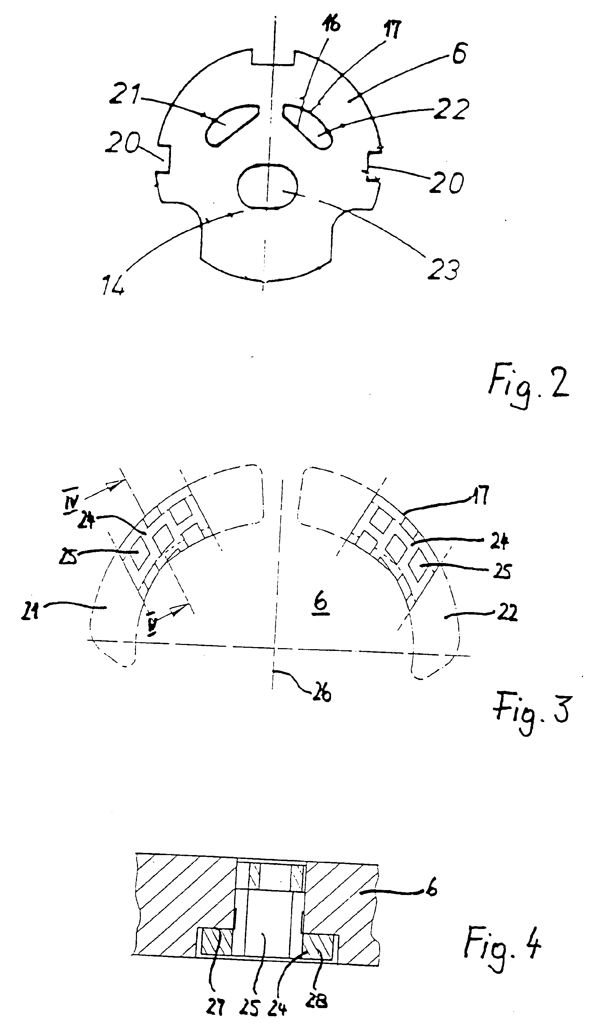

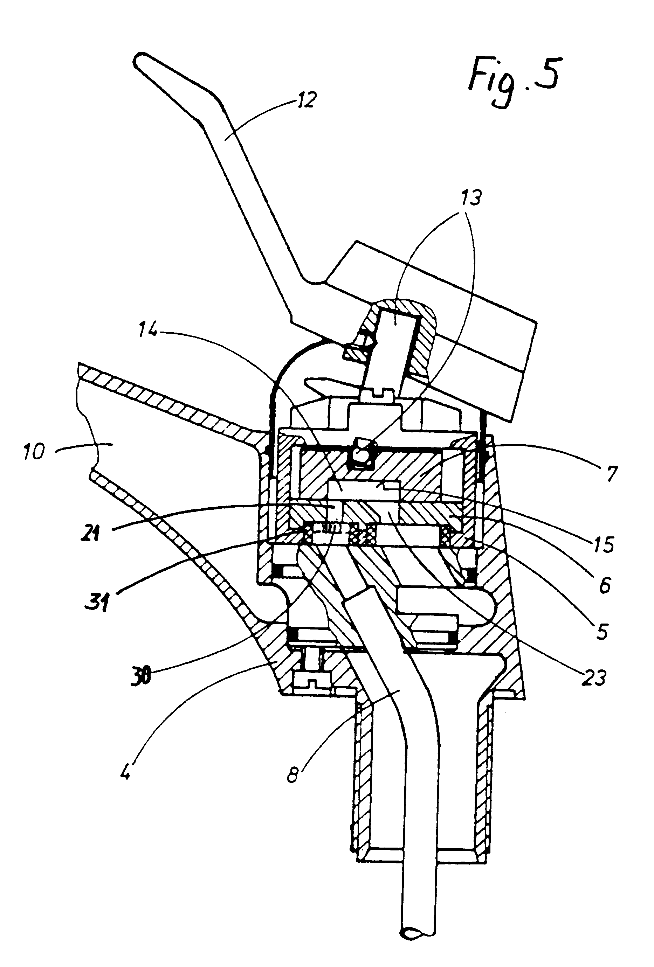

Wie aus den Figuren 3 und 4 näher ersichtlich, sind in den Einlaßöffnungen 21, 22 für das warme bzw. kalte Wasser Einsätze 24 angeordnet, welche Durchtrittsöffnungen 25 für den jeweiligen Wasserstrom aufweisen. Die Einsätze 24 sind jeweils symmetrisch zu einer Mittenachse 26 der Ventilsitzscheibe 6 angeordnet, wobei auch die Einlaßöffnungen 21, 22 ihrerseits symmetrisch zu der Mittenachse 26 liegen, wie letzteres für derartige Mischarmaturen dem Stand der Technik entspricht. Die Einsätze betragen in ihrer bogenförmigen Erstreckung etwa ein Drittel der Gesamtbogenlänge der Öffnungen 21, 22. Die Anordnung der Einsätze 24 in den Einlaßöffnungen 21, 22 sowie auch die Zahl und die Anordnung der Durchtrittsöffnungen 25 in den Einsätzen 24 richten sich dabeinach der Festlegung des im einzelnen gewünschten Schwenkwinkels für den Bedienungshebel 12 in dem vorgegebenen Komfortzonenbereich.

Die Einsätze 24 sind vorzugsweise aus Kunststoff gefertigt und bündig in die Ventilsitzscheibe 6 eingesetzt ; hierzu ist die Ventilsitzscheibe 6 im Bereich der Begrenzungskanten 16, 17 der Einlaßöffnungen 21, 22 abgestuft, daß sich eingezogene Rücksprünge 27 ergeben, auf denen die Einsätze 24 mit schulterartig angeformten Vorsprüngen 28 auflagern. Da die Einsätze in Fließrichtung des Wassers, also in dem dargestellten Ausführungsbeispiel von unten her, in die Ventilsitzscheibe 6 eingesetzt sind, ist für einen form- und kraftschlüssigen Sitz der Einsätze gesorgt.

In den Einsätzen 24 können die Durchtrittsöffnungen 25 senkrecht oder schräg zur Ebene der Ventilsitzscheibe 6 wie auch geradlinig oder gebogen darin verlaufen.

Wie nicht weiter dargestellt, ist es nicht unbedingt erforderlich, die Einsätze sich über die gesamte Materialstärke der Ventilsitzscheibe 6 erstrecken zu lassen, vielmehr reicht es auch aus, in die Oberfläche der Ventilsitzscheibe 6 in Anströmrichtung des Wassers bündig ein Lochblech einzusetzen, welches die gewünschte Querschnittsverminderung verwirklicht.

Die Erfindung beschränkt sich jedoch nicht darauf, die Querschnittsverminderungen in den Öffnungen 21, 22 der Ventilsitzscheibe 6 selbst vorzusehen ; wie aus der Figur 5 ersichtlich, können derartige Einsätze erfindungsgemäß auch vor der Ventilsitzscheibe 6 und außerhalb derselben, jedoch unmittelbar aus der Ventilsitzscheibenkorper angrenzend angeordnet werden. Hierzu bietet es sich beispielsweise an, Einsätze 30 an den Dichtungen 31 zwischen der Ventilsitzscheibe 6 und den Anschlußkanälen 8 zu haltern. Wie aus der Figur 5 im einzelnen nicht zu entnehmen ist, weisen die Einsätze 30 ebenfalls die erfindungsgemäßen Durchtrittsöffnungen für das die Anschlußkanäle 8 durchströmende Wasser auf.

Die in der vorstehenden Beschreibung, den Patentansprüchen und der Zusammenfassung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

**Patentansprüche**

1. Sanitäre Einhebelmischarmatur mit aus wenigstens zwei Scheiben (6, 7) gebildeten Steuerelementen, von denen eine als feststehende Ventilsitzscheibe (6) ausgebildet ist und zwei Einlaßöffnungen (21, 22) für kaltes und warmes Wasser sowie eine Auslaßöffnung (23) aufweist, während die zweite Scheibe (7) auf der Ventilsitzscheibe (6) beweglich angeordnet und mit einer Mischkammeröffnung (14) versehen ist, wobei die Einlaßöffnungen (21, 22) in der Ventilsitzscheibe (6) über einen Teilbereich einen verringerten Querschnitt aufweisen, und wobei die Querschnittsverringerungen jeweils symmetrisch zueinander in der Ventilsitzscheibe (6) angeordnet sind, dadurch gekennzeichnet, daß die Ventilsitzscheibe (6) in Teilbereichen der Einlaßöffnungen (21, 22) angeordnete und die Querschnittsverringerungen ausbildende Einsätze (24) mit Durchtrittsöffnungen (25) für das warme beziehungsweise kalte Wasser aufweist.

2. Mischarmatur nach Anspruch 1, dadurch gekennzeichnet, daß die Einsätze (24) die Ventilsitzscheibe (6) in der Materialstärke durchdringen und bündig in die Scheibe (6) eingelassen sind.

3. Mischarmatur nach Anspruch 2, dadurch gekennzeichnet, daß die Einsätze (24) in Strömungsrichtung des die Ventilsitzscheibe (6) anströmenden Wassers an den Kanten (16, 17) der Einlaßöffnungen (21, 22) gehalten sind.

4. Mischarmatur nach Anspruch 3, dadurch gekennzeichnet, daß die Ventilsitzscheibe (6) an den Begrenzungskanten (16, 17) der Einlaßöffnungen (21, 22) eingezogene Rücksprünge aufweist, auf denen die Einsätze (24) mit schulterartigen Vorsprüngen (28) auflagern.

5. Sanitäre Einhebelmischarmatur mit aus wenigstens zwei Scheiben (6, 7) gebildeten Steuerelementen, von denen eine als feststehende Ventilsitzscheibe (6) ausgebildet ist und zwei einem Kaltwasserzulauf und einem Warmwasserzulauf (8) zugeordnete Einlaßöffnungen (21, 22) sowie eine Auslaßöffnung (23) aufweist, während die zweite Scheibe (7) auf der Ventilsitzscheibe (6) beweglich angeordnet und mit einer Mischkammeröffnung (14) versehen ist, wobei die Wasserwege für das kalte und warme Wasser über einen Teilbereich einen verringerten Querschnitt aufweisen und die Querschnittsverringerungen jeweils symmetrisch zueinander ausgelegt sind, dadurch gekennzeichnet, daß in Strömungsrichtung des Wassers vor dem Ventilsitzscheibenkörper (6) an diesen unmittelbar angrenzend die Querschnittsverringerungen ausbildende Einsätze (30) mit Durchtrittsöffnungen für das über die Kanäle (8) zuströmende Wasser angeordnet sind.

6. Mischarmatur nach Anspruch 5, dadurch gekennzeichnet, daß die Einsätze (30) die Einlaßöffnungen (21, 22) der Ventilsitzscheibe (6) in Teilbereichen abdecken.

7. Mischarmatur nach Anspruch 5 oder 6, dadurch gekennzeichnet, daß die Einsätze (30) an den die Zufuhrkanäle (8) gegen die Ventilsitzscheibe (6) abdichtenden Dichtungen (31) gehaltert sind.

8. Mischarmatur nach einem der Ansprüche 1-7, dadurch gekennzeichnet, daß die Durchtrittsöffnungen (25) in den Einsätzen (24) senkrecht zur Ebene der Ventilsitzscheibe (6) verlaufen.

9. Mischarmatur nach einem der Ansprüche 1-7, dadurch gekennzeichnet, daß die Durchtrittsöffnungen (25) in den Einsätzen (24) schräg zur Ebene der Ventilsitzscheibe (6) verlaufen.

10. Mischarmatur nach einem der Ansprüche 1-9, dadurch gekennzeichnet, daß die Durchtrittsöffnungen (25) in den Einsätzen (24) geradlinig verlaufen.

11. Mischarmatur nach einem der Ansprüche 1-9, dadurch gekennzeichnet, daß die Durchtrittsöffnungen (25) in den Einsätzen (24) einen gebogenen Verlauf aufweisen.

12. Mischarmatur nach einem der Ansprüche 1-9, dadurch gekennzeichnet, daß die Durchtrittsöffnungen (25) parallel zur Ebene der Ventilsitzscheibe (6) verlaufen und mittels senkrecht zu dieser Ebene verlaufender Rippen ausgebildet sind.

13. Mischarmatur nach Anspruch 1, dadurch gekennzeichnet, daß die Einsätze (24) in Gestalt einer bündig in die Scheibe (6) eingelegten Lochscheibe ausgebildet sind.

14. Mischarmatur nach einem der Ansprüche 5-7, dadurch gekennzeichnet, daß die Einsätze (30) in Gestalt einer Lochscheibe ausgebildet sind.

15. Mischarmatur nach einem der Ansprüche 1-14, dadurch gekennzeichnet, daß die Einsätze aus Siebmaterial bestehen.

16. Mischarmatur nach Anspruch 15, dadurch gekennzeichnet, daß das Siebmaterial in einer den Einsätzen (24, 30) entsprechenden Form vorgebogen sind.

17. Mischarmatur nach einem der Ansprüche 1-16, dadurch gekennzeichnet, daß die Einsätze (24) aus Kunststoff bestehen.

18. Mischarmatur nach einem der Ansprüche 1-17, dadurch gekennzeichnet, daß die Durchtrittsöffnungen (25) im mittleren Bereich der Einlaßöffnungen (21, 22) der Ventilsitzscheibe (6) vorgesehen sind.

19. Mischarmatur nach einem der Ansprüche 1-18, dadurch gekennzeichnet, daß die Durchtrittsöffnungen (25) in den Einsätzen (24, 30) sich etwa über ein Drittel des Querschnitts der Einlaßöffnungen (21, 22) erstrecken.

**Claims**

1. Sanitary single-lever mixing plumbing fixture having control elements which are formed from at least two discs (6, 7), one of which is formed as a fixed valve seat disc (6) and has two inlet openings (21, 22) for cold and hot water and also an outlet opening (23), whilst the second disc (7) is movably arranged on the valve seat disc (6) and is provided with a mixing chamber opening (14), with the inlet openings (21, 22) in the valve seat disc (6) having a reduced cross section over a partial area and the cross-section reductions in each case being arranged symmetrically in respect of each other in the valve seat disc (6), characterised in that the valve seat disc (6) has inserts (24) with through-openings (25) for the hot and cold water respectively arranged in partial areas of the inlet openings (21, 22) and forming the cross-section reductions.

2. Mixing plumbing fixture according to claim 1, characterised in that the inserts (24) penetrate the valve seat disc (6) in the substance of the material and are let into the disc (6) in a flush manner.

3. Mixing plumbing fixture according to claim 2, characterised in that the inserts (24) are held at the edges (16, 17) of the inlet openings (21, 22) in the direction of flow of the water flowing against the valve seat disc (6).

4. Mixing plumbing fixture according to claim 3, characterised in that the valve seat disc (6) has recesses which are incorporated at the limiting edges (16, 17) of the inlet openings (21, 22) and on which the inserts (24) are supported with shoulder-like projections (28).

5. Sanitary single-lever mixing plumbing fixture having control elements which are formed from at least two discs (6, 7) and one of which is formed as a fixed valve seat disc (6) and has two inlet openings (21, 22) associated with a cold water feed and a hot water feed (8) and also an outlet opening (23), whilst the second disc (7) is movably arranged on the valve seat disc (6) and is provided with a mixing chamber opening (14), with the water paths for the cold and hot water having a reduced cross section over a partial area and the cross-section reductions in each case being designed so as to be symmetrical to each other, characterised in that arranged in the flow direction of the water in front of the valve seat disc body (6) directly adjacent to the latter there are inserts (30) forming the cross-section reductions with through-openings for the water flowing in by way of the channels (8).

6. Mixing plumbing fixture according to claim 5, characterised in that the inserts (30) cover the inlet openings (21, 22) of the valve seat disc (6) in partial areas.

7. Mixing plumbing fixture according to claim 5 or 6, characterised in that the inserts (30) are supported at the seals (31) which seal the supply channels (8) in respect of the valve seat disc (6).

8. Mixing plumbing fixture according to one of the claims 1-7, characterised in that the through-openings (25) in the inserts (24) extend so as to be perpendicular to the plane of the valve seat disc (6).

9. Mixing plumbing fixture according to one of the claims 1-7, characterised in that the through-openings (25) in the inserts (24) extend obliquely to the plane of the valve seat disc (6).

10. Mixing plumbing fixture according to one of the claims 1-9, characterised in that the through-openings (25) in the inserts (24) extend in a straight line.

11. Mixing plumbing fixture according to one of the claims 1-9, characterised in that the through-openings (25) in the inserts (24) have a bent course.

12. Mixing plumbing fixture according to one of the claims 1-9, characterised in that the through-openings (25) extend parallel to the plane of the valve seat disc (6) and are formed by means of ribs which extend so as to be perpendicular to this plane.

13. Mixing plumbing fixture according to claim 1, characterised in that the inserts (24) are constructed in the form of a perforated disc which is inserted into the disc (6) in a flush manner.

14. Mixing plumbing fixture according to one of the claims 5-7, characterised in that the inserts (30) are constructed in the form of a perforated disc.

15. Mixing plumbing fixture according to one of the claims 1-14, characterised in that the inserts are made of sieve material.

16. Mixing plumbing fixture according to claim 15, characterised in that the sieve material is prebent in a form which corresponds to the inserts (24, 30).

17. Mixing plumbing fixture according to one of the claims 1-16, characterised in that the inserts (24) are made of plastics material.

18. Mixing plumbing fixture according to one of the claims 1-17, characterised in that the through-openings (25) are provided in the central area of the inlet openings (21, 22) of the valve seat disc (6).

19. Mixing plumbing fixture according to one of the claims 1-18, characterised in that the through-openings (25) in the inserts (24, 30) extend substantially over one third of the cross section of the inlet openings (21, 22).

5

EP 0 338 332 B1

**Revendications**

1. Mitigeur sanitaire à un levier, comportant des éléments de commande formés d'au moins deux disques (6, 7), dont l'un est réalisé sous forme de disque de siège de soupape fixe (6) et présente deux orifices d'entrée (21, 22), pour l'eau froide et chaude, ainsi qu'un orifice de sortie (23), tandis que le deuxième disque (7) est disposé mobile sur le disque de siège de soupape (6) et pourvu d'un orifice de chambre de mélange (14), les orifices d'entrée (21, 22) ménagés dans le disque de siège de soupape (6) présentant sur une zone partielle une section transversale diminuée et les diminution de section transversale étant chacune disposées symétriquement par rapport à l'autre dans le disque de siège de soupape (6), caractérisé en ce que le disque de soupape (6) présente, dans des zones partielles des orifices d'entrée (21, 22), des garnitures (24) qui diminuent la section transversale, et comportent des orifices de passage (25) respectifs pour l'eau chaude ou froide.

2. Mitigeur selon la revendication 1, caractérisé en ce que les garnitures (24) pénètrent le disque de siège de soupape (6) dans l'épaisseur du matériau et sont insérées dans le disque (6) en affleurant celui-ci.

3. Mitigeur selon la revendication 2, caractérisé en ce que les garnitures (24) sont maintenues, dans le sens de l'écoulement de l'eau qui passe dans le disque de siège de soupape (6), sur les arêtes (16, 17) des orifices d'entrée (21, 22).

4. Mitigeur selon la revendication 3, caractérisé en ce que le disque de siège de soupape (6) présente sur les arêtes de limitation (16, 17) des orifices d'entrée (21, 22) des évidements, dans lesquels sont posés les garnitures (24), à l'aide de saillies (28) en forme d'épaulement.

5. Mitigeur sanitaire à un levier, comportant des éléments de commande formés d'au moins deux disques (6, 7), dont l'un est réalisé sous forme de disque de siège de soupape fixe (6) et présente deux orifices d'entrée (21, 22), associés à une amenée d'eau froide et à une amenée d'eau chaude (8), ainsi qu'un orifice de sortie (23), tandis que le deuxième disque (7) est disposé mobile sur le disque de siège de soupape (6) et pourvu d'un orifice de chambre de mélange (14), les canaux d'eau destinés à l'eau froide ou chaude présentant sur une zone partielle une section transversale diminuée et les diminutions de section transversale étant chacune disposées symétriquement par rapport à l'autre, caractérisé en ce que les garnitures (30) qui diminuent la section transversale, et comportent des orifices de passage pour l'eau qui s'écoule par les canaux (8), sont disposées, dans le sens d'écoulement de l'eau, en amont du corps de disque de siège de soupape (6), directement limitrophe à celui-ci.

6. Mitigeur selon la revendication 5, caractérisé en ce que les garnitures (30) recouvrent les orifices d'entrée (21, 22) du disque de siège de soupape (6) dans des zones partielles.

7. Mitigeur selon la revendication 5 ou 6, caractérisé en ce que les garnitures (30) sont maintenues sur les joints d'étanchéité (31) qui assurent l'étanchéité des canaux d'amenée (8) par rapport au disque de siège de soupape (6).

8. Mitigeur selon l'une des revendications 1 à 7, caractérisé en ce que les orifices de passage (25) s'étendent dans les garnitures (24), perpendiculairement au plan du disque de siège de soupape (6).

9. Mitigeur selon l'une des revendications 1 à 7, caractérisé en ce que les orifices de passage (25) s'étendent dans les garnitures (24), inclinés par rapport au plan du disque de siège de soupape (6).

10. Mitigeur selon l'une des revendications 1 à 9, caractérisé en ce que les orifices de passage (25) s'étendent dans les garnitures (24), suivant un trajet rectiligne.

11. Mitigeur selon l'une des revendications 1 à 9, caractérisé en ce que les orifices de passage (25) s'étendent dans les garnitures (24), suivant un trajet incurvé.

12. Mitigeur selon l'une des revendications 1 à 9, caractérisé en ce que les orifices de passage (25) s'étendent parallèlement au plan du disque de siège de soupape (6) et sont réalisées au moyen de nervures perpendiculaires à ce plan.

13. Mitigeur selon la revendication 1, caractérisé en ce que les garnitures (24) sont réalisées sous la forme d'un disque percé, inséré dans le disque (6) et affleurant celui-ci.

14. Mitigeur selon l'une des revendications 5 à 7, caractérisé en ce que les garnitures (24) sont réalisées sous la forme d'un disque percé.

15. Mitigeur selon l'une des revendications 1 à 14, caractérisé en ce que les garnitures (24) sont réalisées en un matériau formant tamis.

16. Mitigeur selon la revendication 15, caractérisé en ce que le matériau formant tamis est préformé dans un moule de forme correspondant à celle des garnitures (24, 30).

17. Mitigeur selon l'une des revendications 1 à 16, caractérisé en ce que les garnitures (24) sont réalisées en matière synthétique.

18. Mitigeur selon l'une des revendications 1 à 17, caractérisé en ce que les orifices de passage (25) sont prévus dans la zone centrale des orifices d'entrée (21, 22) du disque de siège de soupape (6).

19. Mitigeur selon l'une des revendications 1 à 18, caractérisé en ce que les orifices de passage (25) ména-

6

gés dans les garnitures (24, 30) s'étendent à peu près sur un tiers de la section transversale des orifices d'entrée (21, 22).

# Fig.1

Fig. 2

Fig. 3

Fig. 4

Fig.5